# EUROPÄISCHE PATENTSCHRIFT

(11) **EP 2 702 757 B1**
(45) Veröffentlichungstag und Bekanntmachung des Hinweises auf die Patenterteilung: **17.10.2018**
(21) Anmeldenummer: 12719263.1
(22) Anmeldetag: 19.04.2012
(51) Int. Cl.: H04N 1/387, H04N 1/04, H04N 1/193

(54) **SCAN-VERFAHREN FÜR EIN GROSSFORMATIGES SCANNER-SYSTEM MIT STITCHING-VERFAHREN**
SCANNING METHOD FOR A LARGE-SIZE SCANNER SYSTEM USING A STITCHING PROCESS
PROCÉDÉ DE BALAYAGE POUR SYSTÈME DE SCANNER GRAND FORMAT AVEC PROCÉDÉ D'ASSEMBLAGE

(30) Priorität: 23.04.2011 DE 102011018496
(43) Veröffentlichungstag der Anmeldung: 05.03.2014
(73) Patentinhaber: Roth + Weber GmbH, 57520 Niederdreisbach (DE)
(72) Erfinder: KÄMPFLEIN, Simon, 57520 Friedewald (DE); SCHÖLPEN, Burkhard, 57072 Siegen (DE)
(74) Vertreter: Grosse, Wolf-Dietrich Rüdiger
(86) Internationale Anmeldenummer: PCT/EP2012/001692
(87) Internationale Veröffentlichungsnummer: WO 2012/146358

(56) Entgegenhaltungen:
- EP-A2- 1 422 924
- JP-A- 2006 067 031
- US-A1- 2003 138 167
- US-B1- 6 348 981

## Beschreibung

Die Erfindung betrifft ein Scan-Verfahren für ein großformatiges Scanner-System, das wenigstens zwei kaskadenförmig, mit wenigstens einem Überlappungsbereich angeordnete Bilderfassungselemente zur Abtastung einer großformatigen Scan-Vorlage aufweist, bei dem mittels eines Stitching-Verfahrens die Bildinformationen in dem wenigstens einem Überlappungsbereich der Bilderfassungselemente zusammengesetzt werden, wobei der wenigstens eine Überlappungsbereich innerhalb eines Suchbereiches nach Bildinformationen durchsucht wird.

Durch die DE 10 2009 011 945 B4 sind großformatige Scanner-Systeme bekannt, bei denen Scan-Vorrichtungen mit durchgehenden Bilderfassungselementen, beispielsweise Contact Image Sensoren (CIS) die komplette Scan-Breite abdecken.

Darüber hinaus sind bei großformatigen Scanner-Systemen Scan-Vorrichtungen mit kaskadenförmig angeordneten Bilderfassungselementen (z.B. CIS) bekannt. Die verwendeten CIS werden in hohen Stückzahlen für kleinformatige Scanner-Systeme im Officebereich eingesetzt und stellen somit einen Kostenvorteil gegenüber den in nur kleinen Stückzahlen produzierten, die komplette Scan-Breite abdeckenden CIS dar.

Die kaskadenförmige Anordnung, auch als sogenannte Zickzack-Ausrichtung bekannt, ist notwendig, um ein durchgehendes Scan-Bild über die komplette Scan-Breite zu erzielen. Der Versatz, bzw. die Überlappung der einzelnen CIS in x- und y-Richtung wird über geeignete Softwareverfahren, beispielsweise sogenannte Stitching-Verfahren, korrigiert, um ein durchgehendes Scan-Bild zu erhalten.

Aus der US 6,348,981 ist es bekannt den Versatz, bzw. die Überlappung der einzelnen Bilderfassungselemente in x- und y-Richtung über statische Korrekturwerte auszugleichen. Diese statischen Korrekturwerte haben den Nachteil, dass in den Übergangsbereichen zwischen den Bilderfassungselementen in x- und y-Richtung Korrekturen nicht durchgängig exakt ausgeführt werden können. Geringfügige Wellen oder Knicke in der Scan-Vorlage oder geringfügige Schwankungen in der Durchlaufgeschwindigkeit der Scan-Vorlage führen zu sichtbaren Bildfehlern in den Übergangsbereichen der Bilderfassungselemente, die sich z.B. als unterbrochene oder versetzte Linien, Doppellinien, etc. darstellen.

Durch die US 2003/0138167 A1 oder die EP 1 422 924 A2 sind auch Verfahren bekannt geworden, bei denen in den Übergangsbereichen zwischen den Bilderfassungselementen durch geeignete Algorithmen auf Mittelwerte der nebeneinander liegenden Bilderfassungselemente eine fließende Überblendung zwischen den Bilderfassungselementen herbeigeführt wird. Die Bildfehler in den Übergangsbereichen zwischen den Bilderfassungselementen werden in x- und y- Richtung unscharf dargestellt, und in begrenztem Rahmen visuell unterdrückt.

Diese Verfahren führen insbesondere bei Scan-Vorlagen mit Linieninformationen nur auf den ersten Blick zu einem verwertbaren Ergebnis.

Um die Nachteile von Stitching-Verfahren mit statischen Korrekturwerten auszuschließen sind adaptive Stitching-Verfahren bekannt.

Bei derartigen Verfahren werden zusätzlich zum Stitching-Verfahren mit statischen Korrekturwerten z.B. die von zwei nebeneinander angeordneten Bilderfassungselementen in den Übergangsbereichen gescannten identischen Bildinhalte in geeigneten Datenspeichern geladen und miteinander verglichen.

Durch geeignete Verfahren werden kongruierende Bildelemente automatisiert erkannt und bei einem bestehenden Versatz in x- oder y-Richtung über Korrekturalgorithmen in Übereinstimmung gebracht.

Die Nachteile dieses Verfahrens sind:
Das Stitching-Ergebnis ist in hohem Maße vom Umfang der Bildinformationen abhängig, die miteinander verglichen werden. Je geringer die Bildinformationen auf der Scan-Vorlage im Überlappungsbereich der Bilderfassungselemente, umso schlechter ist das Stitching-Ergebnis. Bei geringem Umfang von Bildinformationen kommt es vor, dass nicht kongruierende Bildinhalte fälschlich als solche erkannt werden, was regelmäßig zu einer falschen Zuordnung vermeintlicher Übereinstimmungen führt. Ergebnis ist eine Verstärkung des x- bzw. y-Versatzes.

Durch Geschwindigkeitsschwankungen während des Transports der Scan-Vorlage unter den kaskadenförmig angeordneten Bilderfassungselementen kommt es zu unkontrollierbaren, nicht linearen Informationsverschiebungen in den Übergangsbereichen der gescannten Bildinhalte. Mit dem bestehenden Verfahren ist es nicht möglich diese Informationsverschiebungen auszugleichen, da die Übereinstimmungen der überlappenden Bildinformationen durch die Geschwindigkeitsschwanken zu weit auseinander liegen, um in Übereinstimmung gebracht zu werden. Es ist bekannt in derartigen Fällen den Suchbereich zu vergrößern. Nachteilig ist hier, dass durch die größere zu untersuchende Datenmenge Performancenachteile entstehen, die den Scan-Vorgang verzögern oder zum Stillstand bringen können. Darüber hinaus führt ein vergrößerter Suchbereich regelmäßig zu Bildfehlern, da weit auseinander liegende nur scheinbar kongruierende Bildelemente in Übereinstimmung gebracht werden, was die sichtbaren Versätze in x- und y-Richtung verstärkt.

Die o. a. Geschwindigkeitsschwankungen treten am Anfang der Scan-Vorlage verstärkt auf. Ursache hierfür ist, dass in der Regel bei kaskadenförmig angeordneten Bilderfassungselementen nicht angetriebene federnd gelagerte Reflektorwalzen eingesetzt werden, deren Aufgabe es ist, die Scan-Vorlage definiert an die unterhalb des Bilderfassungselements angeordnete Glasscheibe anzudrücken. Dies ist auf Grund des geringen Fokusbereichs der gängigen Bilderfassungselemente notwendig, um ein scharfes Scan-Bild zu erzeugen. Die genannten nicht angetriebenen Reflektorwalzen müssen durch die Scan-Vorlage beschleunigt und angetrieben werden, was unweigerlich zu besagten Geschwindigkeitsschwankungen am Anfang der Scan-Vorlage führt. Erschwerend kommt hinzu, dass insbesondere am Anfang der Scan-Vorlage in der Regel keine Bildinformationen enthalten sind. Dies ist deshalb der Fall, weil beispielsweise bei den in der Norm definierten Zeichenblattgrößen für technische Zeichnungen grundsätzlich ein umlaufender unbedruckter Rand von 5mm vorgegeben ist. Die Geschwindigkeitsschwankungen und die fehlenden Bildinformationen insbesondere am Anfang der Scan-Vorlage führen zusammen zu einer weiteren Verschlechterung des Stitching-Ergebnisses.

Die Erfindung geht von der Aufgabe aus, bei einem Scan-Verfahren für ein großformatiges Scanner-System mit mehreren Bilderfassungselementen, bei dem mittels eines Stitching-Verfahrens Bildinformationen zusammengesetzt werden, bei den Überlappungsbereichen das Stitching-Ergebnis zu verbessern, Bildfehler zu vermeiden und das Stitching-Verfahren zu beschleunigen.

Die Aufgabe wird erfindungsgemäß für ein Verfahren der eingangs genannten Art durch die im Patentanspruch 1 angegebenen Merkmale gelöst. Vorteilhafte Ausbildungen sind in den abhängigen Patentansprüchen angegeben.

Die Aufgabe wird erfindungsgemäß durch folgende Schritte gelöst:
Texturerkennung innerhalb des festgelegten Suchbereiches der Scan-Vorlage, Wertung der Informationsdichte in der erkannten Textur zur Bestimmung eines Maßes für den Texturgehalt,
Wichtung der Informationsdichte in Abhängigkeit von dem Maß für den Texturgehalt der erkannten Textur,
Detektion von kongruierenden Bildelementen innerhalb des festgelegten Suchbereiches der Scan-Vorlage,
Ermittlung einer gewichteten Abweichung für jeden Messpunkt aus der von der Textur abgeleiteten Wichtung und der ermittelten Abweichung jeder Messung, Bestimmung eines gewichteten Mittelwerts der Abweichungen aus diesen gewichteten Abweichungen und
Berechnung aus diesem gewichteten Mittelwert der Abweichung von Verschiebungswerten zur Korrektur der Lage der versetzten Bildelemente, so dass diese Bildelemente in Übereinstimmung gebracht werden.

Durch dieses erfindungsgemäße Scan-Verfahren für ein großformatiges Scanner-System mittels eines adaptiven Stitching-Verfahrens und dynamischen Korrekturalgorithmen werden in den Überlappungsbereichen das Resultat des Stitching-Verfahrens verbessert, Fehler bei der Bildgebung vermieden und die Durchführung des Stitching-Verfahrens beschleunigt.

In vorteilhafter Weise kann der festgelegte Suchbereich gemäß Schritt S1 zu Beginn der Abtastung der Scan-Vorlage in seiner Größe veränderbar, insbesondere vergrößerbar sein.

Erfindungsgemäß kann die Detektion von kongruierenden Bildelementen gemäß Schritt S4 durch Erfassung von ermittelten Abweichungen in x- und y-Richtung erfolgen.

Es hat sich als vorteilhaft erwiesen, wenn die Detektion von kongruierenden Bildelementen innerhalb des festgelegten Suchbereiches gemäß Schritt S4 in bestimmten Intervallen neben der Texturerkennung erfolgt.

Erfindungsgemäß können vor Schritt S1 zu Beginn der Abtastung der Scan-Vorlage folgende Schritte durchgeführt werden:
Definierung eines größeren Suchbereich zur Erkennung des Anfangs der Scan-Vorlage und
Ermittlung eines Texturwerts innerhalb des Suchbereiches und Wichtung der erkannten Textur.

In vorteilhafter Weise können folgende weitere Schritte durchgeführt werden:
Ermittlung feiner regelmäßiger Informationsstrukturen von vermeintlich kongruierenden Bildinformationen, die nicht eindeutig zugeordnet werden können,
Abgleich der im Suchbereich ermittelten vermeintlich kongruierenden Bildinformationen mit den statischen Stitching-Parametern, die sich aus dem x- und y-Versatz der Bilderfassungselemente zueinander ergeben,
Wichtung entsprechend der Übereinstimmung der vermeintlich kongruierenden Bildinformationen mit den statischen Stitching-Parametern und
Detektion von Bildinformationen mit der höchsten Gewichtung als kongruierende Bildinformationen.

Erfindungsgemäß werden durch die Korrekturalgorithmen bestehende x- und/oder y-Versätze ausgeglichen.

Es hat sich als vorteilhaft erwiesen, wenn die Wichtung der Informationsdichte der Abweichungen und Auswahl des Maximums gemäß Schritt S3 mit Hilfe von statischen Stitching-Parametern berechnet werden.

In vorteilhafter Weise kann die Bestimmung eines gewichteten Mittelwerts der Abweichungen gemäß Schritt S6 durch Filterung und/oder Mittelwertbildung unter Berücksichtigung der jeweiligen Gewichtung der gewichteten Abweichungen für jeden der Messpunkte erfolgen.

Die Erfindung ist nachfolgend anhand von in der Zeichnung dargestellten Ausführungsbeispielen näher erläutert. Es zeigen:
- Fig. 1: ein Scanner-System mit Bilderfassungselement und Reflektorwalze,
- Fig. 2: ein Scanner-System mit kaskadenförmig angeordneten Bilderfassungselementen,
- Fig. 3: ein Flussdiagramm des erfindungsgemäßen Verfahrensablaufs, und
- Fig. 4: die erfindungswesentlichen Verfahrensschritte für das großformatige Scanner-System.

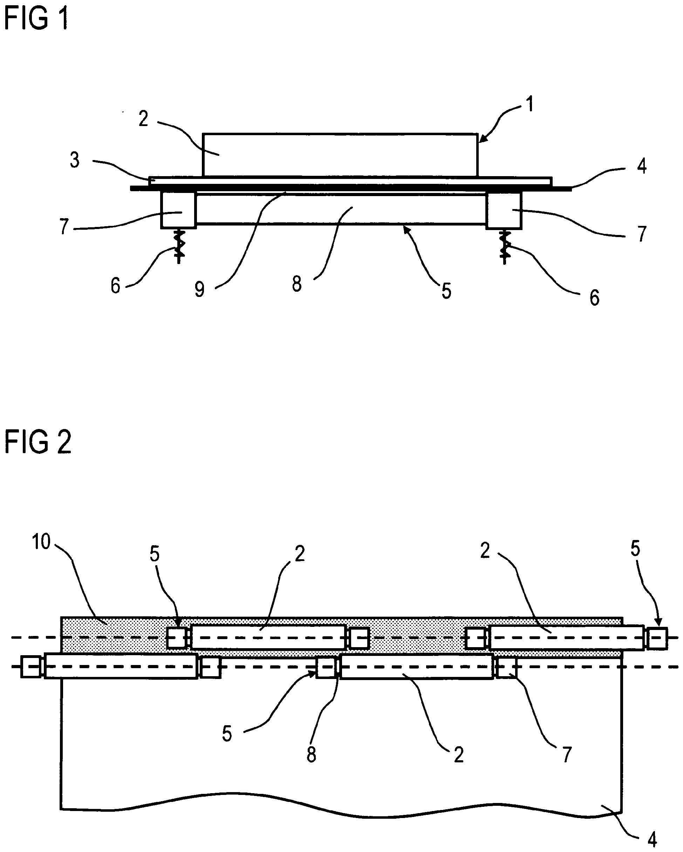

In der Figur 1 ist ein Scanner-System 1 mit einem Bilderfassungselement 2 dargestellt, vor dem eine Glasscheibe 3 angeordnet ist. Gegen diese Glasscheibe 3 wird eine Scan-Vorlage 4 durch eine Reflektorwalze 5 mittels Federn 6 gedrückt. Die Federn 6 greifen dabei kraftmäßig an Seitenbereichen 7 der Reflektorwalze 5 an und drücken damit die Reflektorwalze 5 auf die Scan-Vorlage 4. Die Seitenbereiche 7 der Reflektorwalze 5 sind mit seitlichen Anschlägen versehen, die einen größeren Durchmesser aufweisen als der Mittenbereich 8 der Reflektorwalze 5. Dadurch bildet sich zwischen der Reflektorwalze 5 und der Glasscheibe 3 im Mittenbereich 8 ein Spalt 9, der eine definierte Größe aufweist, die eine optimale Anlage der Scan-Vorlage 4 an der Glasscheibe 3 sicherstellt. Zum Anderen sorgt der Spalt 9 im Mittenbereich 8 der Reflektorwalze 5 für genügend Raum für die Scan-Vorlage 4.

In der Figur 2 ist ein Scanner-System 1 mit vier zum Scannen einer großformatigen Scan-Vorlage kaskaden- oder zickzackförmig angeordneten Bilderfassungselementen 2 in Aufsicht dargestellt. Jedem Bilderfassungselement 2 ist eine nicht angetriebene Reflektorwalze 5 mit im Mittenbereich 8 gegenüber den Seitenbereichen 7 reduziertem Durchmesser zugeordnet. Der Scan-Vorlage 4 ist ein Suchbereich 10 zugeordnet, in dem mittels eines Stitching-Verfahrens nach Bildinformationen durchsucht wird, um die durch Geschwindigkeitsschwankungen während des Transports der Scan-Vorlage 4 unter den kaskadenförmig angeordneten Bilderfassungselementen 2 auftretenden, unkontrollierbaren, nicht linearen Informationsverschiebungen zu eliminieren.

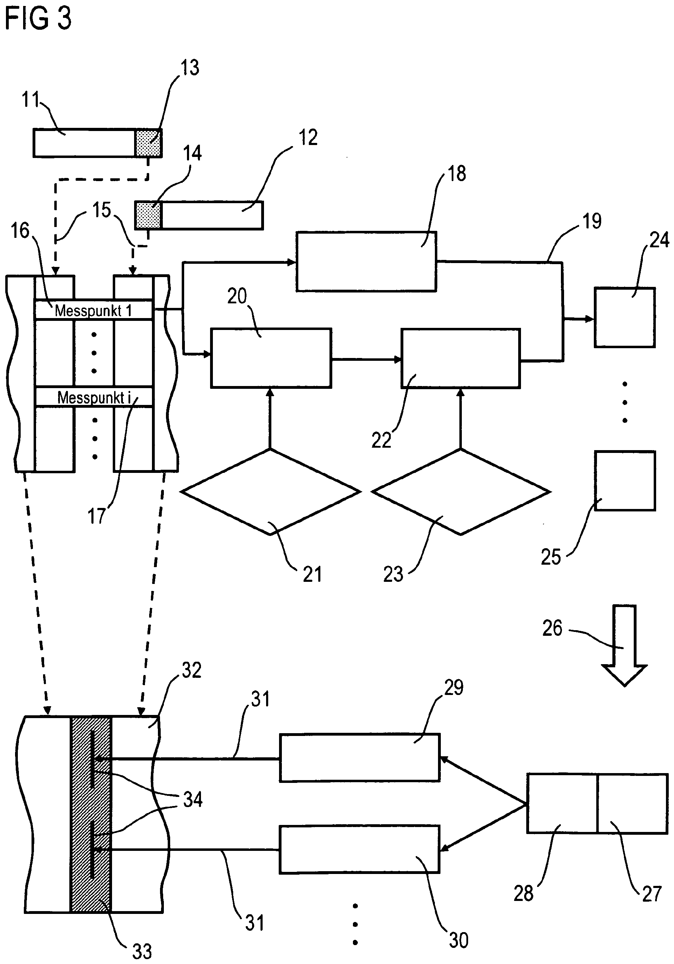

Die Ausgangssignale der Bilderfassungselemente 2 werden bekannterweise einer Verarbeitungsschaltung zugeführt, die eine Zusammensetzung der Bildsignale bewirkt. Beim erfindungsgemäßen Scan-Verfahren wird dabei ein adaptives Stitching-Verfahren mit dynamischen Korrekturalgorithmen eingesetzt, das anhand der Figur 3 nachfolgend beschrieben wird.

Anhand der Figur 3 wird nun der erfindungsgemäße Verfahrensablauf näher erläutert, bei dem ein großformatiges Scanner-System 1 mit zwei sich bereichsweise überlappenden Sensorelementen 11 und 12 beispielsweise dargestellt ist. Das erste Sensorelement 11 weist einen ersten Überlappungsbereich 13 und das zweite Sensorelement 12 einen zweiten Überlappungsbereich 14 auf. Diese überlappenden Bildbereiche sind vergrößert unterhalb der Sensorelemente 11 und 12 nochmals zur Veranschaulichung gemäß den gestrichelten Pfeilen 15 wiedergegeben. Die Sensorelemente 11 und 12 weisen in diesen überlappenden Bildbereichen mehrere Messpunkte auf, darunter einen ersten Messpunkt 16 und einen i-ten Messpunkt 17. Aufgrund der in den überlappenden Bildbereichen ermittelten Werte wird eine Texturerkennung 18 durchgeführt, die ein Maß 19 für den Texturgehalt der gemessenen Bereiche liefert. Gleichzeitig erfolgt eine Detektion 20 kongruierender Bildinformationen. Wird aufgrund einer Abfrage 21 der Beginn der Scan-Vorlage 4 erkannt, wird ggf. der Suchbereich vergrößert. Aus den, aus der Detektion 20 ermittelten Werten wird eine Gewichtung 22 der Abweichungen und Auswahl des Maximums mit Hilfe von statischen Stitching-Parametern 23 berechnet. Aus dem Maß 19 für den Texturgehalt und der Gewichtung 22 wird dann für jeden der 1 bis i Messpunkte 16 bis 17 eine gewichtete Abweichung 24 bis 25 gebildet.

Daraus erhält man, dem Pfeil 26 folgend, mittels Filterung 27 und Mittelwertbildung 28 unter Berücksichtigung der jeweiligen Gewichtung der gewichteten Abweichungen 24 bis 25 für den Bereich mit i Messpunkten gewichtete Mittelwerte 29 bis 30 der Abweichungen.

Durch Verschiebung 31 in x- und/oder y-Richtung der Bildpunkte in Abhängigkeit von den ermittelten Verschiebungswerten erhält man ein gestitchtes Ausgangsbild 32 mit einem Überblendungsbereich 33, in dem die zusammengehörigen Bildpunkte der Überlappungsbereiche 13 und 14 in Übereinstimmung gebracht worden sind. An Schnittlinien 34 sind die ursprünglichen Überlappungsbereiche 13 und 14 der Scan-Vorlage 4 zusammengesetzt.

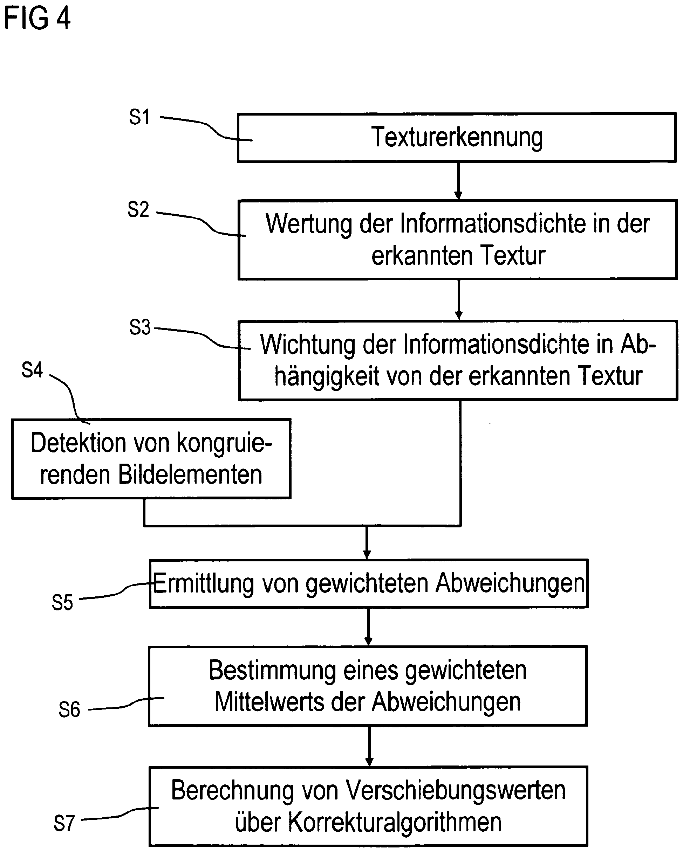

In der Figur 4 sind die erfindungswesentlichen Schritte des erfindungsgemäßen Scan-Verfahrens für das großformatige Scanner-System 1, das zwei kaskadenförmig, mit einem Überlappungsbereich 13 und 14 angeordnete Bilderfassungselemente 2 zur Abtastung einer großformatigen Scan-Vorlage 4 aufweist, bei dem mittels eines Stitching-Verfahrens die Bildinformationen in dem Überlappungsbereich 13 und 14 der Bilderfassungselemente 2 zusammengesetzt werden, wobei der wenigstens eine Überlappungsbereich 13 und 14 innerhalb eines Suchbereiches 10 nach Bildinformationen durchsucht wird, nochmals zusammenfassend dargestellt.

In einem ersten Verfahrensschritt S1 wird eine Texturerkennung 18 innerhalb des festgelegten Suchbereiches 10 der Scan-Vorlage 4 durchgeführt. In der erkannten Textur erfolgt in einem zweiten Verfahrensschritt S2 eine Wertung der Informationsdichte zur Bestimmung eines Maßes 19 für den Texturgehalt. Daraus resultiert in einem dritten Verfahrensschritt S3 eine Wichtung 22 der Informationsdichte in Abhängigkeit von dem Maß 19 für den Texturgehalt der erkannten Textur.

Gleichzeitig wird gemäß einem Verfahrensschritt S4 eine Detektion 20 von kongruierenden Bildelementen innerhalb des festgelegten Suchbereiches 10 der Scan-Vorlage 4 durchgeführt. Mit diesen Werten wird in einem Verfahrensschritt S5 eine Ermittlung 24 bis 25 einer gewichteten Abweichung für jeden Messpunkt 16 bis 17 aus der von der Textur abgeleiteten Wichtung 22 und der ermittelten Abweichung 24 bis 25 jeder Messung durchgeführt. Aus diesen gewichteten Abweichungen erfolgt in einem Verfahrensschritt S6 die Bestimmung 27 und 28 eines gewichteten Mittelwerts 29 bis 30 der Abweichungen für jeden Bildpunkt.

Aus diesem gewichteten Mittelwert 29 und 30 der Abweichungen resultiert gemäß einem Verfahrensschritt S7 eine Berechnung von Verschiebungswerten zur Korrektur der Lage der versetzten Bildelemente, so dass diese Bildelemente in Übereinstimmung gebracht werden.

Zusammenfassend werden im Folgenden die Vorteile des erfindungsgemäßen Verfahrens gegenüber dem bekannten Stand der Technik erläutert.

Zur Verbesserung des Stitching-Ergebnisses bei geringen oder fehlenden Bildinformationen und Geschwindigkeitsschwankungen während des Transports der Scan-Vorlage 4 werden während des Scan-Vorgangs die Überlappungsbereiche 13 und 14 der Bilderfassungselemente 2, bzw. 11 und 12, innerhalb eines Suchbereiches 10 mit festgelegter Größe nach Bildinformationen durchsucht. Dazu wird beim erfindungsgemäßen Verfahren innerhalb des festgelegten Suchbereiches grundsätzlich eine Texturerkennung 18 der Scan-Vorlage 4 durchgeführt.

Suchbereiche 10 mit hoher Informationsdichte ergeben einen hohen Texturwert oder Maß 19 für den Texturgehalt und erhalten eine hohe Gewichtung. Suchbereiche 10 mit geringer Informationsdichte ergeben einen niedrigen Texturwert 19 und erhalten dementsprechend eine geringe Gewichtung.

Es kommt regelmäßig vor, dass Scan-Vorlagen 4 in den Überlappungsbereichen 13 und 14 der Bilderfassungselemente 2 homogene Informationsflächen, wie zum Beispiel Grauflächen, zeigen. Derartige Flächen werden als niedriger Texturwert 19 erkannt und mit geringer Gewichtung eingestuft und bewertet.

Beim erfindungsgemäßen Verfahren werden innerhalb des festgelegten Suchbereiches 10 in bestimmten Intervallen Algorithmen angewendet, die neben der Texturerkennung 18 durch Detektion kongruierender Bildinformationen 20 derartig kongruierenden Bildinformationen automatisch erkennen. Die ermittelten Abweichungen in x- und y-Richtung werden dabei erfasst.

Bei bestehenden Verfahren hat es sich als nachteilig erwiesen, den erkannten Versatz in x- und/oder y-Richtung nach jeder Messung in Übereinstimmung zu bringen. Die Übereinstimmung wird erreicht, indem Zeilen in x- und/oder y-Richtung von der Breite eines Pixels hinzugefügt oder entfernt werden. Eine derartige Vorgehensweise nach jeder Messung führt zu einem häufigen und unnötigen Ausgleichen des Versatzes und einer Verstärkung der Bildfehler.

Beim erfindungsgemäßen Verfahren wird bei jeder Messung in Abhängigkeit von der erkannten Textur eine Gewichtung ermittelt. Darüber hinaus wird bei jeder Messung die Abweichung kongruierender Bildelemente ermittelt. Aus der von der Textur abgeleiteten Gewichtung und der ermittelten Abweichung jeder Messung wird eine gewichtete Abweichung 24 bis 25 für jeden Messpunkt 16 bis 17 ermittelt. Aus dieser gewichteten Abweichung 24 bis 25 einer Anzahl an Messungen wird ein gewichteter Mittelwert der Abweichungen 29 bis 30 ermittelt. Aus diesem gewichteten Mittelwert der Abweichung 29 bis 30 werden die versetzten Bildelemente über die Korrekturalgorithmen in Übereinstimmung gebracht.

Erfolg dieses Verfahrens ist eine deutliche Verbesserung des Stitching-Ergebnisses.

Folgt auf einen Suchbereich mit hohem Texturwert 19 ein homogener Bildbereich mit niedriger Textur, kommt es bei bestehenden Verfahren regelmäßig vor, dass die angewandten Korrekturalgorithmen greifen, ohne dass eine Notwendigkeit hierfür besteht.

Folge sind verstärkte Bildfehler in Form von Versätzen in x- und/oder y-Richtung. Diese Bildfehler treten mit zunehmender Länge des homogenen Bildbereiches mit niedriger Textur verstärkt auf.

Beim erfindungsgemäßen Verfahren wird in den homogenen Bildbereichen mit niedriger Textur, d. h. mit einem geringen Maß für Texturgehalt 19, bei jeder aktuellen Messung eine niedrige Gewichtung vorgenommen. Hinzukommt, dass in derartigen Bereichen regelmäßig kaum Abweichungen von kongruierende Bildelementen erfasst werden können.

Aufgrund der niedrigen Gewichtung der Textur und der ermittelten Abweichungsergebnisse der kongruierenden Bildelemente wird kein Korrekturalgorithmus angewandt. Dies führt dazu, dass die oben beschriebenen Bildfehler nicht auftreten.

Folgt auf den homogenen Bildbereich mit niedriger Textur ein Bildbereich mit hoher Textur, treten bei bekannten Verfahren mit adaptivem Stitching regelmäßig verstärkt Bildfehler in Form von Versätzen in x- und y-Richtung auf, die erst im weiteren Scan-Verlauf erkannt und ausgeglichen werden.

Beim erfindungsgemäßen Verfahren wird der Bildbereich mit hohem Texturwert 19 bei der aktuellen Messung erkannt und mit einer hohen Gewichtung versehen.

Ebenfalls wird die Abweichung kongruierender Bildelemente bei der aktuellen Messung ermittelt. Aus der von der Textur abgeleiteten hier hohen Gewichtung und der ermittelten Abweichung der aktuellen Messung wird eine gewichtete Abweichung 25 für die aktuelle Messung ermittelt. Gleiches geschieht für eine Anzahl vorheriger Messungen. Aus dieser gewichteten Abweichung 25 der aktuellen Messung und der Anzahl an gewichteten Abweichungen 24 vorheriger Messungen wird ein gewichteter Mittelwert 29 bis 30 der Abweichungen ermittelt. Aus diesem gewichteten Mittelwert 29 bis 30 der Abweichung werden die versetzten Bildelemente über die Korrekturalgorithmen in Übereinstimmung gebracht.

Erfahrungsgemäß fließt die gewichtete Abweichung 25 der aktuellen Messung durch die hohe Gewichtung aufgrund einer hohen Texturdichte 19 stärker in den Korrekturalgorithmus ein, was zur Folge hat, dass ein Versatz in x- und/oder y-Richtung durch die Korrekturalgorithmen sofort ausgeglichen werden. Ein verstärkter Versatz am Anfang von Bildbereichen mit hoher Textur tritt nicht auf.

Wie eingangs erläutert, treten am Anfang der Scan-Vorlage 4 häufig Bildfehler in Form eines Versatzes in x- und/oder y-Richtung auf, die insbesondere im Bereich der ersten Bildinformation, z.B. einer horizontal verlaufenden Linie, vorhanden sind.

Ursache für diese Bildfehler sind hauptsächlich fehlende Bildinformationen am Anfang der Scan-Vorlage 4 und Geschwindigkeitsschwankungen beim Transport der Scan-Vorlage 4, die durch die bekannten Verfahren nicht erkannt und ausgeglichen werden können.

Zur Verbesserung des Stitching-Ergebnisses zu Beginn der Abtastung der Scan-Vorlage 4 wird beim erfindungsgemäßen Verfahren der Anfang der Scan-Vorlage 4 erkannt. Dazu wird automatisch ein größerer Suchbereich definiert.

Dieser größere Suchbereich ist nur am Anfang der Scan-Vorlage 4 anwendbar, da hier erfahrungsgemäß nur wenige Bildinformationen auftreten und die Gefahr, dass durch den großen Suchbereich weit auseinander liegende nur scheinbar kongruierende Bildelemente erkannt und in Übereinstimmung gebracht werden, nicht besteht. Durch die geringen Bildinformationen besteht weiterhin nicht die Gefahr von Performanceproblemen.

Das erfindungsgemäße Verfahren kann auf Grund des größeren Suchbereiches auf eine größere Datenbasis aufbauen, was zu einer höheren Effektivität bei der Erkennung von Texturen und Bildinformationen führt. Hinzu kommt, dass durch den größeren Suchbereich auch größere Versätze zwischen den Bildinformationen erkannt werden können.

Innerhalb des Suchbereiches wird zunächst der Texturwert 19 ermittelt und entsprechend gewichtet. Erfahrungsgemäß befinden sich am Anfang der Scan-Vorlage 4 nur wenige Bildinformationen. Folglich ergibt sich bei der aktuellen Messung eine niedrige Textur mit niedriger Gewichtung.

Die Messung wird wie oben beschrieben erfindungsgemäß fortgeführt. Nach der Erkennung der Textur und der Gewichtung wird bei jeder aktuellen Messung die Abweichung der kongruierenden Bildelemente ermittelt.

Aus der von der Textur abgeleiteten Gewichtung und der ermittelten Abweichung jeder Messung wird eine gewichtete Abweichung 24 bis 25 für jede Messung ermittelt. Aus dieser gewichteten Abweichung 24 bis 25 einer Anzahl von Messungen wird ein gewichteter Mittelwert 29 bis 30 der Abweichungen ermittelt. Aus diesem gewichteten Mittelwert 29 bis 30 der Abweichung werden die versetzten Bildelemente über die Korrekturalgorithmen in Übereinstimmung gebracht.

Das Ergebnis ist, dass in Bereichen mit niedriger Textur und folglich niedriger Gewichtung in der Regel keine Korrekturalgorithmen notwendig werden. Folgt jedoch auf den Bereich mit niedriger Textur ein Bereich mit hoher Textur, z. B. in Form einer horizontal verlaufenden Linie, wird dies bei der aktuellen Messung erkannt und entsprechend hoch gewichtet.

Ein verstärkter Versatz in Bildbereichen mit hoher Textur tritt hierbei jedoch nicht auf.

Bei bekannten Verfahren entstehen regelmäßig Bildfehler in Form von x- und/oder y-Versätzen in feinen Informationsstrukturen. Ursache hierfür ist, dass bekannte Stitching-Verfahren im Suchbereich 10 des Überlappungsbereiches 13 und 14 der Bilderfassungselemente 2, bzw. 11 und 12, durch die feinen regelmäßigen Informationsstrukturen z.T. mehrere vermeintlich kongruierende Bildinformationen erkannt werden. Durch die bekannten Korrekturalgorithmen kommt es dabei regelmäßig vor, dass diese Bildinformationen falsch in Übereinstimmung zueinander gebracht werden, was verstärkte Bildfehler in Form von x- und/oder y-Versätzen zur Folge hat.

Zur Verbesserung des Stitching-Ergebnisses bei feinen regelmäßigen Informationsstrukturen werden beim erfindungsgemäßen Verfahren über einen Algorithmus vermeintlich kongruierende Bildinformationen, die nicht eindeutig zugeordnet werden können, erkannt.

Über ein Verfahren erfolgt ein Abgleich der im Suchbereich 10 ermittelten, vermeintlich kongruierenden Bildinformationen mit den statischen Stitching-Parametern 23, die sich aus dem x- und y-Versatz der Bilderfassungselemente 2, bzw. 11 und 12, zueinander ergeben.

Je höher die Übereinstimmung der vermeintlich kongruierenden Bildinformationen mit den statischen Stitching-Parametern 23 ist, umso höher werden diese gewichtet.

Die Bildinformationen mit der höchsten Gewichtung werden als kongruierende Bildinformationen erkannt. Durch die Korrekturalgorithmen werden bestehende x- und/oder y-Versätze ausgeglichen.

### Bezugszeichenliste

- 1: Scanner-System
- 2: Bilderfassungselement
- 3: Glasscheibe
- 4: Scan-Vorlage
- 5: Reflektorwalze
- 6: Federn
- 7: Seitenbereiche
- 8: Mittenbereich
- 9: Spalt
- 10: Suchbereich
- 11: erstes Sensorelement
- 12: zweites Sensorelement
- 13: erster Überlappungsbereich
- 14: zweiter Überlappungsbereich
- 15: Pfeile
- 16: erster Messpunkt
- 17: i-ter Messpunkt
- 18: Texturerkennung
- 19: Maß für Texturgehalt
- 20: Detektion kongruierender Bildinformationen
- 21: Abfrage des Beginns der Scan-Vorlage
- 22: Gewichtung der Abweichungen und Auswahl des Maximum
- 23: statische Stitching-Parameter
- 24: gewichtete Abweichung (Messpunkt 1)
- 25: gewichtete Abweichung (Messpunkt i)
- 26: Pfeil
- 27: Filterung
- 28: Mittelwertbildung
- 29: gewichteter Mittelwert der Abweichungen
- 30: gewichteter Mittelwert der Abweichungen
- 31: Verschiebung in x-/y-Richtung
- 32: gestitchtes Ausgangsbild
- 33: Überblendungsbereich
- 34: Schnittlinien

- S1 bis S8: Verfahrensschritte

## Patentansprüche

1. Scan-Verfahren für ein großformatiges Scanner-System (1), das wenigstens zwei kaskadenförmig, mit wenigstens einem Überlappungsbereich (13, 14) angeordnete Bilderfassungselemente (2) zur Abtastung einer großformatigen Scan-Vorlage (4) aufweist, bei dem mittels eines Stitching-Verfahrens die Bildinformationen in dem wenigstens einem Überlappungsbereich (13, 14) der Bilderfassungselemente (2) zusammengesetzt werden, wobei der wenigstens eine Überlappungsbereich (13, 14) innerhalb eines Suchbereiches (10) nach Bildinformationen durchsucht wird,
**gekennzeichnet durch**
folgende Schritte:
S1. Texturerkennung (18) innerhalb des festgelegten Suchbereiches (10) der Scan-Vorlage (4),
S2. Wertung der Informationsdichte in der erkannten Textur zur Bestimmung eines Maßes (19) für den Texturgehalt,
S3. Wichtung der Informationsdichte in Abhängigkeit von dem Maß (19) für den Texturgehalt der erkannten Textur,
S4. Detektion (20) einer Abweichung von kongruierenden Bildinformationen innerhalb des festgelegten Suchbereiches (10) der Scan-Vorlage (4),
S5. Ermittlung einer gewichteten Abweichung (24 bis 25) für jeden Messpunkt (16 bis 17) aus der von der Textur abgeleiteten Wichtung und der detektierten Abweichung jeder Messung,
S6. Bestimmung (27, 28) eines gewichteten Mittelwerts (29 bis 30) der Abweichungen aus diesen gewichteten Abweichungen (24 bis 25) und
S7. Berechnung aus diesem gewichteten Mittelwert (29 bis 30) der Abweichung von Verschiebungswerten (31) zur Korrektur der Lage von versetzten Bildelementen, so dass diese Bildelemente in Übereinstimmung gebracht werden.

2. Scan-Verfahren nach Anspruch 1,
**dadurch gekennzeichnet,**
**dass** der festgelegte Suchbereich (10) gemäß Schritt S1 zu Beginn der Abtastung der Scan-Vorlage (4) in seiner Größe veränderbar, insbesondere vergrößerbar ist.

3. Scan-Verfahren nach Anspruch 1 oder 2,
**dadurch gekennzeichnet,**
**dass** die Detektion (20) von kongruierenden Bildelementen gemäß Schritt S4 durch Erfassung von ermittelten Abweichungen in x- und y-Richtung erfolgt.

4. Scan-Verfahren nach einem der Ansprüche 1 bis 3,
**dadurch gekennzeichnet,**
**dass** die Detektion (20) von kongruierenden Bildinformationen innerhalb des festgelegten Suchbereiches (10) gemäß Schritt S4 in bestimmten Intervallen neben der Texturerkennung (18) erfolgt.

5. Scan-Verfahren nach einem der Ansprüche 1 bis 4,
**dadurch gekennzeichnet,**
**dass** vor Schritt S1 zu Beginn der Abtastung der Scan-Vorlage (4) folgende Schritte durchgeführt werden:
Definierung eines größeren Suchbereich zur Erkennung des Anfangs der Scan-Vorlage (4) und
Ermittlung eines Texturwerts (19) innerhalb des Suchbereiches und Wichtung der erkannten Textur.

6. Scan-Verfahren nach einem der Ansprüche 1 bis 5,
**dadurch gekennzeichnet,**
**dass** folgende weitere Schritte durchgeführt werden:
Ermittlung feiner regelmäßiger Informationsstrukturen von vermeintlich kongruierenden Bildinformationen, die nicht eindeutig zugeordnet werden können,
Abgleich der im Suchbereich ermittelten vermeintlich kongruierenden Bildinformationen mit den statischen Stitching-Parametern, die sich aus dem x- und y-Versatz der Bilderfassungselemente zueinander ergeben,
Wichtung entsprechend der Übereinstimmung der vermeintlich kongruierenden Bildinformationen mit den statischen Stitching-Parametern, und
Detektion von Bildinformationen mit der höchsten Gewichtung als kongruierende Bildinformationen.

7. Scan-Verfahren nach Anspruch 6,
**dadurch gekennzeichnet,**
**dass** durch die Korrekturalgorithmen bestehende x- und/oder y-Versätze ausgeglichen werden.

8. Scan-Verfahren nach einem der Ansprüche 1 bis 7,
**dadurch gekennzeichnet,**
**dass** die Wichtung der Informationsdichte der Abweichungen und Auswahl des Maximums gemäß Schritt S3 mit Hilfe von statischen Stitching-Parametern (23) berechnet wird.

9. Scan-Verfahren nach einem der Ansprüche 1 bis 8,
**dadurch gekennzeichnet,**
**dass** die Bestimmung (27, 28) eines gewichteten Mittelwerts der Abweichungen (29 bis 30) gemäß Schritt S6 durch Filterung (27) und/oder Mittelwertbildung (28) unter Berücksichtigung der jeweiligen Gewichtung der gewichteten Abweichungen (24 bis 25) erfolgt.

## Claims

1. A scanning method for a large-format scanner system (1), which comprises at least two image sensing elements (2) arranged in a cascade-like manner with at least one overlapping region (13, 14) for scanning a large-format scan template (4), where by means of a stitching process the image information is assembled in the at least one overlapping region (13, 14) of the image sensing elements (2), wherein the at least one overlapping region (13, 14) within a search region (10) is searched for image information,
**characterised by** the following steps:
S1. Texture recognition (18) within the defined search region (10) of the scan template (4),
S2. Rating the information density in the recognised texture for determining a measure (19) for the texture content,
S3. Weighting the information density in dependence of the measure (19) for the texture density of the recognised texture,
S4. Detecting (20) a deviation of congruent image information within the defined search region (10) of the scan template (4),
S5. Ascertaining a weighted deviation (24 to 25) for each measuring point (16 to 17) from the weighting derived from the texture and the detected deviation of each measurement,
S6. Determining (27, 28) a weighted mean value (29 to 30) of the deviations from these weighted deviations (24 - 25), and
S7. Calculating displacement values (31) from this weighted mean value (29 to 30) of the deviation for correcting the position of offset image elements, so that these image elements are reconciled with each other.

2. The scanning method according to claim 1, **characterised in that** the defined search region (10) as per step S1 is changeable in its size, in particular enlargeable at the beginning of scanning the scan template (4).

3. The scanning method according to claim 1 or 2, **characterised in that** detection (20) of congruent image elements as per step S4 is effected by detecting ascertained deviations in x direction and in y direction.

4. The scanning method according to one of claims 1 to 3, **characterised in that** detection (20) of congruent image information within the defined search region (10) as per step S4 is effected at certain intervals next to texture recognition (18).

5. The scanning method according to one of claims 1 to 4, **characterised in that** ahead of step S1 the following steps are performed at the beginning of scanning the scan template (4):
defining a larger search region for detecting the start of the scan template (4) and
ascertaining a texture value (19) within the search region and weighting the recognised texture.

6. The scanning method according to one of claims 1 to 5, **characterised in that** the following steps are performed:
ascertaining fine regular information structures of allegedly congruent image information, which cannot be unequivocally assigned,
reconciling the allegedly congruent image information ascertained in the search region with the static stitching parameters which result from the x and y offset of the image sensing elements to one another,
weighting corresponding to the match of the allegedly congruent image information with the static stitching parameters, and detecting image information with the highest weighting as congruent image information.

7. The scanning method according to claim 6, **characterised in that** x and/or y offsets resulting from the correction algorithms are compensated for.

8. The scanning method according to one of claims 1 to 7, **characterised in that** the weighting of the information density of the deviations and selection of the maximum as per step S3 is calculated with the aid of static stitching parameters (23).

9. The scanning method according to one of claims 1 to 8, **characterised in that** determination (27, 28) of a weighted mean value of the deviations (29 to 30) as per step S6 is effected by filtering (27) and/or mean value forming (28) taking into account the respective weighting of the weighted deviations (24 to 25).

## Revendications

1. Procédé de numérisation pour un système de numériseur de grand format (1), qui comporte au moins deux éléments de saisie d'image (2) disposés en cascade avec au moins une zone de chevauchement (13,14) pour le balayage d'un modèle à numériser de grand format (4), pour lequel les informations d'image sont assemblées au moyen d'un procédé d'assemblage dans au moins une zone de chevauchement (13,14) des éléments de saisie d'image (2), au moins une zone de chevauchement (13,14) étant explorée à l'intérieur d'une zone de recherche (10) d'après les informations d'image,
**caractérisé par** les étapes suivantes :
S1. identification de la texture (18) à l'intérieur de la zone de recherche définie (10) du modèle à numériser (4),
S2. évaluation de la densité d'informations dans la texture identifiée pour déterminer une mesure (19) pour la teneur de la texture,
S3.pondération de la densité d'informations en fonction de la mesure (19) pour la teneur de la texture de la texture identifiée,
S4. détection (20) d'un écart des informations d'image congruentes à l'intérieur de la zone de recherche définie (10) du modèle à numériser (4),
S5. définition d'un écart pondéré (24 à 25) pour chaque point de mesure (16 à 17) à partir de la pondération dérivée de la texture et de l'écart détecté de chaque mesure,
S6. détermination (27,28) d'une moyenne pondérée (29 à 30) des écarts à partir de ces écarts pondérés (24 à 25), et
S7. calcul à partir de cette moyenne pondérée (29 à 30) de l'écart des valeurs de déplacement (31) pour correction de la position des éléments d'image décalés de telle sorte que ces éléments d'image sont mis en concordance.

2. Procédé de numérisation selon la revendication 1, **caractérisé en ce que** la zone de recherche définie (10) peut être modifiée dans sa taille, être notamment agrandie, selon l'étape S1 au début du balayage du modèle à numériser (4).

3. Procédé de numérisation selon la revendication 1 ou 2, **caractérisé en ce que** la détection (20) des éléments d'image congruents a lieu en direction x et y selon l'étape S4 par saisie des écarts déterminés.

4. Procédé de numérisation selon l'une quelconque des revendications 1 à 3, **caractérisé en ce que** la détection (20) des informations d'image congruents à l'intérieur de la zone de recherche définie (10) a lieu selon l'étape S4 à certains intervalles en plus de l'identification de texture (18).

5. Procédé de numérisation selon l'une quelconque des revendications 1 à 4, **caractérisé en ce qu'**avant l'étape S1, les étapes suivantes sont effectuées au début du balayage du modèle à numériser :
définition d'une zone de recherche plus grande pour identifier le commencement du modèle à numériser (4), et
détermination d'une valeur de texture (19) à l'intérieur de la zone de recherche et pondération de la texture identifiée.

6. Procédé de numérisation selon l'une quelconque des revendications 1 à 5, **caractérisé en ce que** les autres étapes suivantes sont effectuées :
détermination de structures d'information régulières fines d'informations d'image supposées congruentes, qui ne peuvent pas être attribuées de façon claire,
harmonisation des informations d'image supposées congruentes déterminées dans la zone de recherche avec les paramètres d'assemblage statiques, qui résultent du décalage x et y des éléments de saisie d'image,
pondération correspondant à la concordance des informations d'image supposées congruentes avec les paramètres d'assemblage statiques, et
détection des informations d'image avec la pondération maximale en tant qu'informations d'image congruentes.

7. Procédé de numérisation selon la revendication 6, **caractérisé en ce que** les décalages x et y existants sont harmonisés par les algorithmes de correction.

8. Procédé de numérisation selon l'une quelconque des revendications 1 à 7, **caractérisé en ce que** la pondération de la densité d'informations des écarts et du choix du maximum selon l'étape S3 est calculée à l'aide des paramètres d'assemblage statiques (23).

9. Procédé de numérisation selon l'une quelconque des revendications 1 à 8, **caractérisé en ce que** la détermination (27,28) d'une moyenne pondérée des écarts (29 à 30) a lieu selon l'étape S6 par filtrage (27) et/ou la formation de moyenne (28) a lieu en tenant compte de la pondération respective des écarts pondérés (24 à 25) .
